# EUROPÄISCHE PATENTSCHRIFT

(11) **EP 1 213 177 B1**
(45) Veröffentlichungstag und Bekanntmachung des Hinweises auf die Patenterteilung: **27.02.2008**
(21) Anmeldenummer: 01128287.8
(22) Anmeldetag: 29.11.2001
(51) Int. Cl.: B60P 3/42, B60N 2/30, B60N 2/24

(54) **Militärisches Radfahrzeug**
Wheeled army vehicle
Véhicule militaire à roues

(30) Priorität: 06.12.2000 DE 10060859
(43) Veröffentlichungstag der Anmeldung: 12.06.2002
(73) Patentinhaber: Rheinmetall Landsysteme GmbH, 24107 Kiel (DE)
(72) Erfinder: Falkenreck, Andreas, Dipl.-Ing., 34246 Vellmar (DE); Prummenbaum, Eric, Dipl.-Ing., 34246 Vellmar (DE)
(74) Vertreter: Wolf, Jens

(56) Entgegenhaltungen:
- FR-A- 2 620 395
- US-A- 2 704 989
- US-A- 3 927 911
- US-A- 4 188 060
- US-A- 4 303 271

## Beschreibung

Die Erfindung betrifft ein militärisches Radfahrzeug für den Personen- und/oder Materialtransport gemäß Oberbegriff des Patentanspruchs 1.

Ein solches Fahrzeug ist zum Beispiel aus der FR-A-2 620 395 bekannt.

Radfahrzeuge, die sich sowohl für den Personen- als auch Waren- bzw. Gütertransport eignen, sind hinreichend bekannt.

So existieren beispielsweise Personenkraftwagen mit klappbaren Rücksitzen zur Vergrößerung des Kofferraumvolumens. Konstruktionsbedingt ist jedoch der Teil des Kofferraumes, der durch Umklappen der Rücksitzlehne entsteht, nicht für den Transport größerer Lasten geeignet, so daß die Volumenvergrößerung des Kofferraumes nicht mit einer entsprechenden Erhöhung der Lastaufnahmefähigkeit desselben korreliert.

Weiterhin existieren Fahrzeuge, deren Ladeflächen für die Aufnahme von Sitzgestellen vorbereitet sind. Für den Personentransport wird hierbei die Ladefläche mit den Sitzgestellen versehen, die bei einem Waren- oder Gütertransport zumindest teilweise entfernt und im Fahrzeug verstaut werden müssen, um ihre ständige Verfügbarkeit zu gewährleisten.

Der Erfindung liegt die Aufgabe zu Grunde, ein Fahrzeug, insbesondere ein militärisches Fahrzeug derart weiterzuentwickeln, daß der Umrüstaufwand vom Personen- auf den Materialtransport und umgekehrt vergleichsweise gering ist und die Ladefläche verschiedenen Transportaufgaben mit einfachen Mitteln angepaßt werden kann.

Erfindungsgemäß wird die Aufgabe durch die Merkmale des Anspruchs 1 gelöst.

Die Sitzuntergestelle sind dabei erfindungsgemäß in einer horizontalen Ebene verschiebbar, so daß eine zusammenhängende, stetige Transportfläche geschaffen werden kann, von der beispielsweise Transportbehältnisse getragen werden, die in geeigneter, dem Fachmann bekannter Weise gegen Lastumverteilung bei Bewegung des Fahrzeuges gesichert sind.

Die Erfindung ist auch mit dem Vorteil verbunden, daß je nach Transportaufgabe auch gleichzeitig Personen und Waren bzw. Güter transportiert werden, wobei die Waren oder Güter auch von erheblicher Masse sein können. Es besteht die Möglichkeit, innerhalb nur kurzer Zeit über eine Positionierung der jeweiligen Sitzobergestelle eine Optimierung für das zu lösende Transportproblem zu erreichen.

Gemäß der Erfindung wird bevorzugt die gesamte Ladefläche als Transportfläche genutzt. Besteht die Notwendigkeit, mit dem betreffenden Fahrzeug gleichzeitig sowohl Personen als auch Güter zu transportieren, können auf der Transportfläche Teilbereiche variabler Größe durch entsprechende Positionierung der Sitzobergestelle geschaffen werden.

Benachbart zu den Schwenkbereichen der Sitzobergestelle kann mindestens ein Tragkörper angeordnet und an der Lastaufnahme beim Waren- bzw. Gütertransport beteiligt sein. Eine solche Ausführung entlastet den Schwenkbereich zwischen Sitzobergestell und Sitzuntergestell und gewährleistet eine hohe Funktionssicherheit auch über lange Einsatzzeiträume.

Die Ladefläche ist in bevorzugter Ausgestaltung der Erfindung als Minenschutzplatte insbesondere in Form einer Stahlplatte ausgebildet. Auch kann mit dem Sitzuntergestell eine Verstärkungsplatte zum Schutz vor Mineneinwirkung bzw. für einen ballistischen Schutz verbunden sein, wodurch eine hohe Schutzwirkung für auf der Ladefläche des Fahrzeuges befindliche Personen und Güter erreicht wird.

Weiterhin besteht die Möglichkeit, das Sitzuntergestell durch Distanzstücke von der Ladefläche zu beabstanden, so daß ein Freiraum zwischen dem Sitzuntergestell und der Ladefläche entsteht, der zweckmäßig zumindest teilweise mit Minenschutzelementen gefüllt ist. Eine solche Ausführung der Erfindung bietet die Möglichkeit in Abhängigkeit von der erwarteten Bedrohung durch ballistische oder Mineneinwirkung Minenschutzelemente in vorbestimmbarer Anzahl und Verteilung vorzusehen.

Die Erfindung soll nachfolgend anhand eines Ausführungsbeispiels näher erläutert werden.

Es zeigen
- Fig. 1: eine Ladefläche eines Fahrzeuges mit auf dieser angeordneten Distanzstücken zur Befestigung von auch als Transportflächen nutzbaren Sitzen,
- Fig. 2: ein aus Sitzuntergestell und Sitzobergestell gebildeter Sitz mit Schwenkmechanismus für das Sitzobergestell,
- Fig. 3: ein Sitz mit auf das Sitzuntergestell heruntergeklapptem Sitzobergestell,
- Fig. 4: ein Sitz gemäß Fig. 3 mit zur Bildung einer zusammenhängenden Transportflächeneinheit relativ zum Sitzuntergestell horizontal verlagertem Sitzobergestell,
- Fig. 5: eine aus zwei Sitzreihen gebildete Transportfläche, auf der Behälter fixiert sind,
- Fig. 6: eine Darstellung gemäß Fig.4 mit Feststelleinrichtung und
- Fig. 7: eine Seitenansicht von zwei Sitzreihen, die aus Sitzen gemäß Fig. 2 gebildet und deren Sitzobergestelle einander zugewandt sind.

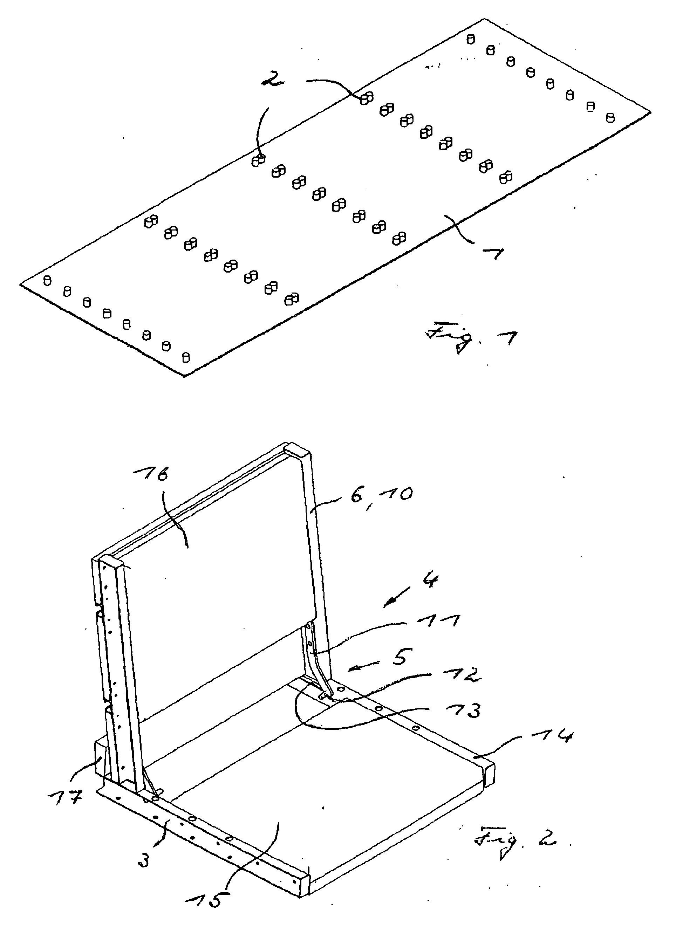

Auf einer Ladefläche 1 eines hier nicht dargestellten militärischen Fahrzeuges sind gemäß Fig. 1 Distanzstücke 2 angeordnet und mit dieser vzw. durch Verschweißen verbunden. Die Distanzstücke 2 tragen Sitzuntergestelle 3 von Sitzen 4, wie sie in Fig. 2 dargestellt sind.

Die Sitzuntergestelle 3 stehen über Schwenkmechanismen 5 mit um horizontale Achsen schwenkbaren Sitzobergestellen 6 in Verbindung, die in hochgeklapptem Zustand als Rückenlehne dienen und heruntergeklappt auf den Sitzuntergestellen 3 aufliegen, so dass die dann jeweils sichtbaren Seiten der Sitzobergestelle 6 gemeinsam eine Transportfläche 7 bilden.

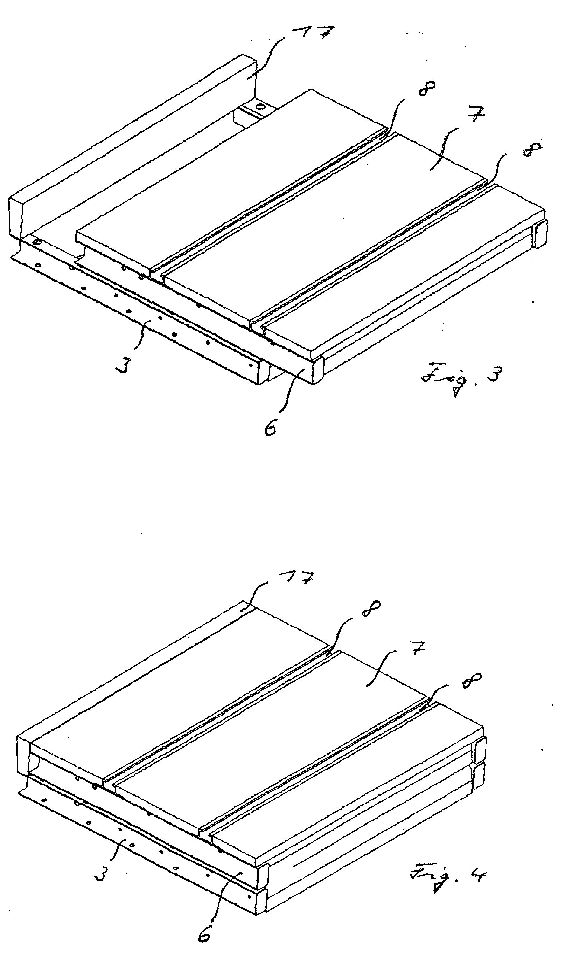

In den Fig. 3 und 4 sind dabei für eine Transportflächeneinheit mögliche Relativlagen eines Sitzobergestells zum jeweiligen Sitzuntergestell 3 erfasst.

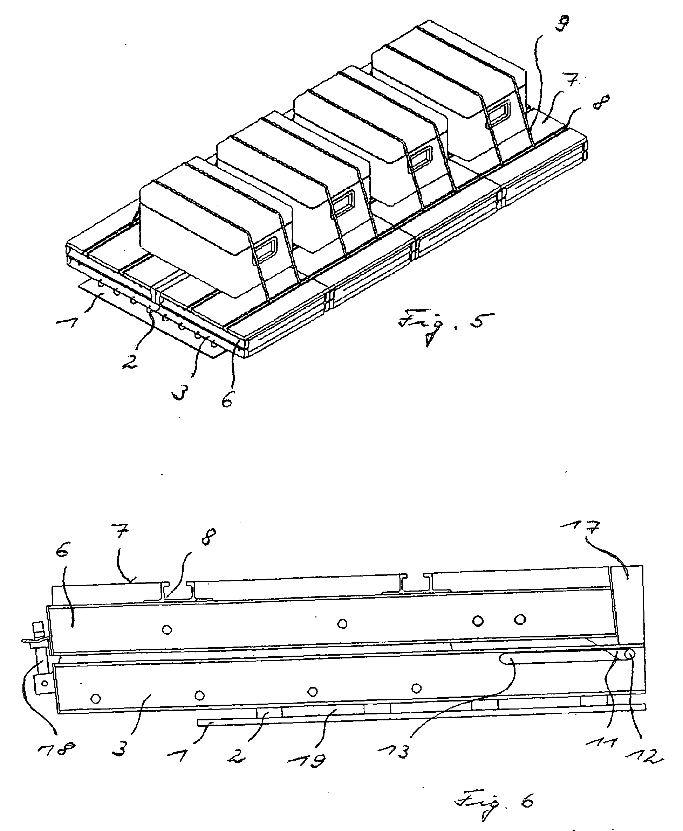

In die Transportflächen 7 sind Befestigungsschienen 8 integriert, so dass im Bedarfsfall das Transportgut durch Befestigungsmittel 9, wie elastische Bänder oder Gurte, deren Endstücke vzw. formschlüssig in die Befestigungsschienen 8 eingreifen, gesichert werden kann. In Fig. 5 ist dies für eine Anzahl von in zwei Reihen angeordneten Sitzen gezeigt, deren Sitzobergestelle 6 zur Bildung der Transportfläche 7 von der Mitte zu den Außenseiten der Sitzuntergestelle 3 umgeklappt worden sind.

Die Anordnung der Sitzuntergestelle 3 auf der Ladefläche 1 und die Positionierung der Sitzobergestelle 6 im heruntergeklappten Zustand relativ zu den Sitzuntergestellen 3 sind so gewählt, daß sich eine geschlossene Transportfläche 7 ergibt, die mindestens die Größe der ursprünglichen Ladefläche 1 hinsichtlich nutzbarer Länge und Breite erreicht.

Zur Realisierung einer solchen Transportfläche 7 sind am Sitzobergestell-Rahmen 10 zwei Schwenkhebel 11 starr befestigt, deren freie Endbereiche Bolzen 12 aufweisen, die in Langlöchern 13 der Sitzuntergestell-Rahmen 14 geführt sind.

Soll nun von einem Personentransport, bei dem das von dem Sitzuntergestell-Rahmen 14 aufgenommene Sitzpolster 15 und das im Sitzobergestell-Rahmen 10 befindliche Rückenpolster 16 einen Sitz 4 bilden (Fig. 2), auf einen Materialtransport umgerüstet werden, so wird durch Herunterklappen des Sitzobergestells 6 (Fig. 3) und Verschiebung desselben bis zur formschlüssigen Anlage an dem Randsteg 17 (Fig. 4) eine stetige Transportflächeneinheit geschaffen, die zur Gewährleistung der Kraftübertragung vom Sitzobergestell 6 auf das Sitzuntergestell 3 beim Materialtransport mit einer Kopplungseinrichtung 18 gemäß Fig. 6 versehen ist.

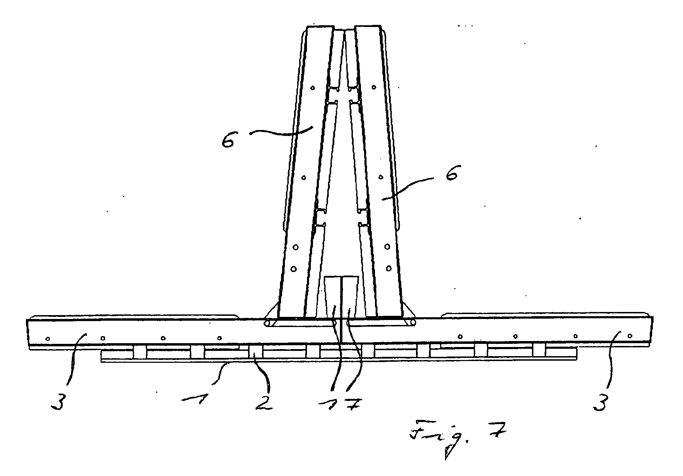

Eine solche Transportflächeneinheit kann mit weiteren Einheiten kombiniert werden, beispielsweise durch Bildung von zwei Reihen, deren Sitzobergestelle 6 aneinander grenzen (Fig. 7).

Zum Schutz der Besatzung des Fahrzeuges vor Mineneinwirkung ist die Ladefläche 1 aus Panzerstahl gefertigt. Die Unterseiten der Sitzpolster 15 können auch im Hinblick auf eine ballistischen Schutz aus Faserverbundwerkstoffen bestehen. Zwischen den Sitzuntergestellen 3 und der Ladefläche 1 befinden sich Minenschutzelemente 19, so zum Beispiel Minenschutzliner und Keramikverbundwerkstoffe, die es ermöglichen, die Gefährdung der im bzw. auf dem Fahrzeug befindlichen Personen auf ein zulässiges Maß zu begrenzen.

Mit der Erfindung wird eine Lösung bereitgestellt, die sowohl einen Personen- als auch einen Materialtranport auf einer Fahrzeugladefläche bei geringen Umrüstaufwand ermöglicht. Dabei steht die gesamte Ladefläche als Nutzfläche zur Verfügung, wobei diese in Nutzflächenbereiche gegliedert ist, die jeweils separat in Abhängigkeit von dem zu erfüllenden Transportauftrag einen Sitz oder eine Transportfläche bilden. Des Weiteren bietet ein solches militärisches Fahrzeug mit der beschriebenen, erfindungsgemäß ausgeführten Ladefläche Schutz vor Einwirkung von Minen.

## Patentansprüche

1. Militärisches Radfahrzeug mit einer Ladefläche (1) für den Personen- und/oder Materialtransport, wobei auf der Ladefläche (1) für einen Personentransport eine Sitzfläche bildende Sitzuntergestelle (3) angeordnet sind, die um eine horizontale Achse mit um diese Achse Schwenkbeweglichen Sitzobergestellen (6) in Verbindung stehen, die in hochgeklapptem und in einer Endstellung festlegbarem Zustand als Rückenlehne bei Personentransport dienen und in heruntergeklapptem Zustand auf der Oberseite die Waren und/oder Güter tragen und mit dem Sitzuntergestell (3) einen Lastaufnahmekörper (3,6,10,14) bilden, der sich auf der Ladefläche (1) des Fahrzeuges abstützt, **dadurch gekennzeichnet, daß** die Sitzobergestelle (6) in einer horizontalen Ebene gegenüber den Sitzuntergestellen (3) verschiebbar sind, so daß eine zusammenhängende, stetige Transportfläche (7) geschaffen werden kann.

2. Fahrzeug nach Anspruch 1, **dadurch gekennzeichnet, daß** die Transportfläche (7) im Wesentlichen der Größe der Ladefläche (1) entspricht.

3. Fahrzeug nach Anspruch 1, **dadurch gekennzeichnet, daß** benachbart zum Schwenkbereich (5) eines Sitzobergestells (6) ein Tragkörper (17) angeordnet und an der Lastaufnahme beim Waren- bzw. Gütertransport beteiligt ist.

4. Fahrzeug nach Anspruch 1, **dadurch gekennzeichnet, daß** die Ladefläche (1) als Minenschutzplatte in Form einer Stahlplatte (1) ausgebildet ist.

5. Fahrzeug nach Anspruch 1 oder 4, **dadurch gekennzeichnet, daß** mit dem Sitzuntergestell (3) eine Verstärkungsplatte zum Schutz vor Mineneinwirkung bzw. für einen ballistischen Schutz in Verbindung steht.

6. Fahrzeug nach Anspruch 1, **dadurch gekennzeichnet, daß** das Sitzuntergestell (3) durch Distanzstücke (2) von der Ladefläche (1) beabstandet ist, so daß ein Freiraum zwischen dem Sitzuntergestell (3) und der Ladefläche (1) entsteht.

7. Fahrzeug nach Anspruch 6, **dadurch gekennzeichnet, daß** der zwischen der Ladefläche (1) und dem Sitzuntergestell (3) gebildete Freiraum zumindest teilweise mit Minenschutzelementen (19) gefüllt ist.

## Claims

1. A military wheeled vehicle with a loading surface (1) for personnel and/or material transport, wherein on the loading surface (1) lower seat frames (3) forming a seating surface for personnel transport are arranged which are connected about a horizontal axis with upper seat frames (6) capable of performing a swivel movement about this axis, which in a folded-up state and in a state lockable in an end position serve as backrest for personnel transport and in the folded-down state on the top carry the goods and with the lower seat frame (3) form a load absorption body (3, 6, 10, 14) which is supported by the loading surface (1) of the vehicle, **characterized in that** the upper seat frames (6) in a horizontal plane are displaceable relative to the lower seat frames (3) so that a contiguous, continuous transport surface (7) can be created.

2. The vehicle according to Claim 1, **characterized in that** the transport surface (7) substantially corresponds to the size of the loading surface (1).

3. The vehicle according to Claim 1, **characterized in that** adjacent to the swivel range (5) of an upper seat frame (6) a carrying body (17) is arranged and involved in the load absorption during goods transport.

4. The vehicle according to Claim 1, **characterized in that** the loading surface (1) is designed as mine protection plate in form of a steel plate (1).

5. The vehicle according to Claim 1 or 4, **characterized in that** a reinforcement plate for protection against the effects of mines or for ballistic protection is connected with the lower seat frame (3),

6. The vehicle according to Claim 1, **characterized in that** the lower seat frame (3) is spaced from the loading surface (1) through spacers (2) so that a clear space is created between the lower seat frame (3) and the loading surface (1).

7. The vehicle according to Claim 6, **characterized in that** the clear space formed between the loading surface (1) and the lower seat frame (3) is at least partially filled with mine protection elements (19).

## Revendications

1. Véhicule à roues militaire avec une surface de chargement (1) pour le transport de personnes et/ou de matériel pour lequel, sur la surface de chargement (1) sont disposés pour transporter des personnes, des châssis inférieurs de siège (3) formant une surface de siège qui sont en liaison autour d'un axe horizontal avec des châssis supérieurs de siège (6) pivotant autour de cet axe, qui, à l'état relevé et fixable en butée, servent de dossiers pour le transport de personnes et qui, à l'état rabattu, portent sur la face supérieure les marchandises et/ou les matériels et qui forment avec le châssis inférieur de siège (3) un élément de réception de la charge (3,6,10,14)qui s'appuie sur la surface de chargement (1) du véhicule, **caractérisé en ce que** les châssis inférieurs de siège (6) peuvent être coulissés dans un plan horizontal en face des châssis inférieurs de siège (3) de sorte qu'il est possible de créer une surface de transport (7) continue permanente.

2. Véhicule selon la revendication 1 **caractérisé en ce que** la surface de transport (7) correspond pour l'essentiel à la taille de la surface de chargement (1).

3. Véhicule selon la revendication 1 **caractérisé en ce qu'**un élément porteur (17) est disposé près de la zone de pivotement (5) d'un châssis supérieur de siège (6) et **en ce que** celui-ci participe à la réception de la charge lors du transport de marchandises et de matériels.

4. Véhicule selon la revendication 1 **caractérisé en ce que** la surface de chargement (1) est conçue en tant que plaque de protection anti-mines sous la forme d'une plaque d'acier (1).

5. Véhicule selon la revendication 1 ou 4 **caractérisé en ce qu'**une plaque de renfort se trouve en liaison avec le châssis inférieur de siège (3) pour assurer une protection contre l'effet des mines ou une protection balistique.

6. Véhicule selon la revendication 1 **caractérisé en ce que** le châssis inférieur de siège (3) est tenu à distance de la surface de chargement (1) par des éléments entretoises (2) de sorte qu'un espace libre est créé entre le châssis inférieur de siège (3) et la surface de chargement (1).

7. Véhicule selon la revendication 6 **caractérisé en ce que** l'espace libre formé entre la surface de chargement (1) et le châssis inférieur de siège (3) est au moins partiellement rempli d'éléments de protection anti-mines (19),
